# EUROPÄISCHE PATENTSCHRIFT

(11) **EP 3 791 083 B1**
(45) Veröffentlichungstag und Bekanntmachung des Hinweises auf die Patenterteilung: **09.03.2022**
(21) Anmeldenummer: 18725784.5
(22) Anmeldetag: 08.05.2018
(51) Int. Cl.: F16D 48/06

(54) **VERFAHREN ZUR STEUERUNG EINES AKTUATORS EINER AKTUATOREINRICHTUNG EINES KRAFTFAHRZEUGES**
METHOD FOR CONTROLLING AN ACTUATOR OF AN ACTUATOR UNIT OF A MOTOR VEHICLE
PROCÉDÉ DE COMMANDE D'UN ACTIONNEUR D'UN DISPOSITIF D'ACTIONNEMENT D'UN VÉHICULE AUTOMOBILE

(43) Veröffentlichungstag der Anmeldung: 17.03.2021
(73) Patentinhaber: GKN Automotive Ltd., West Midlands, B37 7YE (GB)
(72) Erfinder: RESVOLL, Erik, 53572 Bruchhausen (DE); WELLER, Markus, 57612 Kettenhausen (DE); ZIMMERMANN, Mark, 53332 Bornheim (DE); LANGHANKI, Andreas, 47259 Duisburg (DE)
(74) Vertreter: karo IP
(86) Internationale Anmeldenummer: PCT/EP2018/061840
(87) Internationale Veröffentlichungsnummer: WO 2019/214808

(56) Entgegenhaltungen:
- DE-A1- 10 065 355
- DE-A1- 10 308 692
- DE-A1- 10 347 114
- DE-A1-102014 223 559

## Beschreibung

Die vorliegende Erfindung betrifft ein Verfahren zur Steuerung eines Aktuators einer Aktuatoreinrichtung eines Kraftfahrzeuges. Insbesondere ist der Aktuator zur Betätigung einer Kupplung vorgesehen, insbesondere einer Lamellenkupplung, bevorzugt einer Kupplung, die an einer Seitenwelle eines Kraftfahrzeuges angeordnet ist, so dass durch das Schließen der Kupplung die ganze Achse (hier wird die aktuierte Kupplung als Booster bezeichnet) oder auch nur ein Rad (hier wird die aktuierte Kupplung als Twinster bezeichnet) des Kraftfahrzeuges mit einer Antriebseinheit des Kraftfahrzeuges drehmomentübertragend verbunden wird. Der Aktuator ist insbesondere ein elektromechanischer Aktuator.

Ein Aktuator umfasst einen (elektrischen) Antriebsmotor und eine Steuereinrichtung. Ein Aktuator kann z. B. einen Rampenmechanismus aufweisen mit einer drehbaren ersten Scheibe (Stellring), die erste Rampen (Rillen) aufweist, einer nur entlang einer axialen Richtung verlagerbaren zweiten Scheibe (Stellring), die zweite Rampen (Rillen) aufweist, und Kugeln, die in den ersten Rampen und zweiten Rampen zwischen den Scheiben angeordnet sind, sowie mindestens einer Feder zur Verlagerung der zweiten Scheibe entlang der axialen Richtung. Durch die Drehung des Stellrings durch den Antriebsmotor kann die zweite Scheibe entlang der axialen Richtung verlagert werden. Über diese Verlagerung entlang der axialen Richtung kann z. B. eine Kupplung betätigt werden. Der Antriebsmotor kann mit der ersten Scheibe über eine oder mehrere Zahnradpaarungen zur Übertragung einer Drehbewegung verbunden sein.

Der Aufbau einer Kupplung und eines Aktuators ist z. B. aus der DE 100 65 355 C2 bekannt. Dort liegt der Fokus darauf, für den Aktuator einen schnellen Rücklauf mit einem gedämpften Anschlagverhalten zu realisieren. Dafür wird der Elektromotor angepasst betrieben, so dass kurz vor Erreichen einer Ausgangsstellung zur Erzeugung eines Bremsmomentes der Elektromotor entweder kurzgeschlossen oder eine positive Spannung an dem Elektromotor angelegt wird. Damit soll ein Anschlagen der Kugeln an den Rillenenden der Stellringe gedämpft und ein so erzeugter harter Stoß verhindert werden. Andere Verfahren zur Steuerung eines Aktuators eines Kraftfahrzeugs sind aus den DE 103 08 692 A1, DE 103 47 114 A1 und DE 10 2014 223559 A1 bekannt.

Der Komfort eines Kraftfahrzeugs soll stets verbessert werden. Insbesondere sind möglichst alle im Betrieb des Kraftfahrzeugs für einen Insassen des Kraftfahrzeuges hörbaren Geräusche und spürbaren Betriebskräfte aus dem Antriebsstrang zu reduzieren oder zu vermeiden.

Hiervon ausgehend ist es Aufgabe der vorliegenden Erfindung, die im Zusammenhang mit dem Stand der Technik geschilderten Probleme wenigstens teilweise zu lösen. Es soll insbesondere ein Verfahren zur Steuerung eines Aktuators vorgeschlagen werden, durch das eine weitere Reduzierung der hörbaren Geräusche oder spürbaren Betriebskräfte ermöglicht wird.

Hierzu trägt ein Verfahren gemäß den Merkmalen des Patentanspruchs 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Es wird ein Verfahren zur Steuerung (auch als Regelung zu bezeichnen) eines Aktuators einer Aktuatoreinrichtung eines Kraftfahrzeugs vorgeschlagen. Die Aktuatoreinrichtung weist zumindest eine durch den Aktuator betätigte Komponente (z. B. eine Kupplung), den Aktuator sowie einen (elektrischen) Antriebsmotor zum Antrieb des Aktuators auf. Der Antriebsmotor wird in Abhängigkeit von einem Betriebszustand des Kraftfahrzeuges angesteuert. In einem ersten Betriebszustand erfolgt eine Betätigung des Aktuators gemäß einer ersten Regelungsroutine mit einer hohen Dynamik des Antriebsmotors. In einem zweiten Betriebszustand erfolgt die Betätigung des Aktuators gemäß einer zweiten Regelungsroutine mit einer geringeren und/oder (an ein reales Systemverhalten) angepassten Dynamik des Antriebsmotors. Das Verfahren umfasst zumindest die folgenden Schritte:
a) Feststellen einer gewünschten Betätigung des Aktuators;
b) Feststellen eines aktuell vorliegenden Betriebszustands des Kraftfahrzeuges;
c) Auswählen der für den Betriebszustand vorgesehenen Regelungsroutine;
d) Ansteuern des Antriebsmotors mit der ausgewählten ersten Regelungsroutine oder zweiten Regelungsroutine.

Der erste Betriebszustand und der zweite Betriebszustand beziehen sich zumindest auf eine Geräuschentwicklung des Kraftfahrzeuges.

Insbesondere weist der Antriebsmotor eine oder mehrere Zahnradpaarungen (miteinander z. B. über Spiel verbundene mechanische Bauteile der Aktuatoreinrichtung) auf, über die ein Drehmoment des Antriebsmotors zur Betätigung der Komponente übertragbar ist. Insbesondere wird z. B. eine Drehbewegung des Antriebsmotors in eine Verlagerung entlang einer axialen Richtung umgewandelt. Über die Verlagerung erfolgt insbesondere die Betätigung der Komponente.

Insbesondere werden über die Aktuatoreinrichtung Geräusche verursacht, z. B. durch das Anlegen der Zahnflanken von im Eingriff miteinander stehenden Zahnrädern (gerade bei einer Umkehr der (Dreh-)Bewegung des Antriebsmotors). Bei einer Betätigung des Aktuators mit einer hohen Dynamik (erste Regelungsroutine) erfolgt die Ansteuerung des Antriebsmotors mit hoher Geschwindigkeit und möglichst geringer Verzögerung gegenüber der gewünschten Betätigung. Dabei werden z. B. die miteinander über Spiel verbundenen mechanischen Bauteile der Aktuatoreinrichtung möglichst schnell beschleunigt und verfahren, so dass nach Überwindung des zwischen den Bauteilen vorliegenden Spiels ein mechanischer Kontakt der Bauteile erfolgt. Dieser mechanische Kontakt kann gerade in bestimmten Betriebszuständen des Kraftfahrzeuges für Insassen des Kraftfahrzeuges akustisch erfasst werden (hörbar sein).

Bei einer Betätigung des Aktuators mit einer geringen Dynamik (zweite Regelungsroutine) erfolgt die Ansteuerung des Antriebsmotors mit geringerer Geschwindigkeit und ggf. mit einer Verzögerung gegenüber der gewünschten Betätigung. Dabei werden z. B. die miteinander über Spiel verbundenen mechanischen Bauteile der Aktuatoreinrichtung langsamer beschleunigt und/oder mit geringerer Geschwindigkeit verfahren (als bei der ersten Regelungsroutine), so dass nach Überwindung des zwischen den Bauteilen vorliegenden Spiels ein mechanischer Kontakt (gedämpft) erfolgt.

Bedarfsweise, also insbesondere in Abhängigkeit einer aktuellen Geräuschsituation, wird eine potentiell technisch mögliche (und ggf. für diese Regelung übliche) hohe Dynamik abgelehnt und stattdessen eine geringere Dynamik ausgewählt.

Insbesondere kann eine Verbesserung der Regelgüte und somit auch des akustischen Verhaltens erzielt werden, indem die Dynamik der Sollwertvorgabe weiter an die Dynamik des realen Systems angenähert wird (zweite Regelungsroutine). Dafür kann die Dynamik des realen Systems im Betrieb ermittelt werden und die Dynamik der Sollwertvorgabe durch eine Steuereinrichtung erlernt werden. Die Sollwertvorgabe kann insbesondere so erfolgen, dass mit der möglichen Dynamik des realen Systems diese Sollwertvorgabe möglichst genau umgesetzt werden kann.

Hier wird nun vorgeschlagen, dass in Abhängigkeit von einem aktuell vorliegenden Betriebszustand des Kraftfahrzeuges (z. B. über eine Steuereinrichtung) festgestellt wird, welche Regelungsroutine zur Ansteuerung des Antriebsmotors auszuwählen ist.

Die zweite Regelungsroutine umfasst insbesondere eine Betätigung des Aktuators mit einer geringeren Dynamik und/oder mit einer verbesserten Annäherung der Sollwertvorgabe an das tatsächliche Systemverhalten über den gesamten Regelbereich als durch die erste Regelungsroutine. Insbesondere kann durch eine situationsabhängige Filterung der Sollwertvorgabe entsprechend der Systemzeitkonstanten eine Reduktion des Regelfehlers und der Stellgrößen erzielt werden, wodurch beispielsweise das Einschwingverhalten verbessert werden kann und Überschwinger im Kupplungsdrehmoment vermieden werden können. Durch die Reduktion der Stellgrößen ist eine beispielsweise eine Stromreduktion und damit ein geringerer Energieverbrauch möglich.

Insbesondere wird der Aktuator bzw. dessen Antriebsmotor bei der zweiten Regelungsroutine langsamer angesteuert.

Insbesondere wird eine abrupte Beschleunigung des Antriebsmotors reduziert und eine plötzliche Geschwindigkeitsänderung der über den Antriebsmotor angetriebenen Bauteile zumindest zeitweise reduziert. Des Weiteren kann durch ein sanfteres Verfahren des Antriebsmotors und der Aktuatorik sowohl im Betrieb als auch bei Anfahren des Endanschlags eine Geräuschreduktion erzielt werden.

Insbesondere wird so ermöglicht, dass ein zwischen den mechanischen Bauteilen der Aktuatoreinrichtung vorliegendes Spiel mit reduzierter Beschleunigung bzw. Geschwindigkeit überwunden wird. Z. B. kann so ermöglicht werden, dass sich die Zahnflanken miteinander in Eingriff stehender Zahnräder langsamer/ sanfter aneinander anlegen als bei der ersten Regelungsroutine. Eine Geräuschentwicklung kann so reduziert werden.

Insbesondere weist das Kraftfahrzeug in dem ersten Betriebszustand eine erste Geräuschentwicklung und in dem zweiten Betriebszustand eine zweite Geräuschentwicklung auf. Die zweite Geräuschentwicklung ist geringer als die erste Geräuschentwicklung. Insbesondere unterscheiden sich die Geräuschentwicklungen (bzw. die Geräuschniveaus, bevorzugt im Innenraum des Kraftfahrzeuges, bevorzugt im Insassenbereich des Kraftfahrzeuges) um mindestens drei Dezibel, insbesondere um mindestens sechs Dezibel, bevorzugt um mindestens neun Dezibel.

Insbesondere wird die Geräuschentwicklung an einem festgelegten Ort im Innenraum des Kraftfahrzeuges ermittelt, insbesondere im Insassenbereich des Kraftfahrzeuges (also der Bereich, in dem die Sitze für Nutzer des Kraftfahrzeuges angeordnet sind).

Insbesondere wird die zweite Regelungsroutine also dann durchgeführt, wenn eine Geräuschentwicklung des Kraftfahrzeuges geringer ist. In diesem Zustand des Kraftfahrzeugs wäre eine Betätigung des Aktuators (eher) akustisch wahrzunehmen. Es wird also vorgeschlagen, die Regelungsroutine in Abhängigkeit von einer für den Insassen des Kraftfahrzeuges wahrnehmbaren Geräuschkulisse auszuwählen. Damit kann der Komfort des Kraftfahrzeuges wahrnehmbar gesteigert werden.

Eine Wirksamkeit der zweiten Regelungsroutine kann insbesondere in einem Versuchsaufbau überprüft bzw. nachgewiesen werden. Insbesondere wird in einem ruhenden Kraftfahrzeug oder an einer separat bereitgestellten Aktuatoreinrichtung das Verfahren überprüft. Dabei erfolgt zum einen eine Betätigung des Aktuators gemäß einer ersten Regelungsroutine mit einer hohen Dynamik des Antriebsmotors. Zum anderen erfolgt eine Betätigung des Aktuators gemäß einer zweiten Regelungsroutine mit einer angepassten Dynamik des Antriebsmotors. Die bei der Betätigung des Aktuators auftretenden Geräusche werden ermittelt/gemessen und miteinander verglichen. Die Betätigung mit der zweiten Regelungsroutine sollte dabei Geräusche erzeugen, deren maximale Lautstärke mindestens 1 Dezibel, insbesondere mindestens 2 Dezibel, bevorzugt mindestens 3 Dezibel, besonders bevorzugt mindestens 6 Dezibel leiser sind als die maximale Lautstärke der Geräusche, die bei der Betätigung mit der ersten Regelungsroutine auftreten.

Insbesondere kann in Abhängigkeit von der Geräuschentwicklung des Kraftfahrzeuges eine Vielzahl von **unterschiedlichen** Regelungsroutinen vorgesehen sein. Die Regelungsroutinen können hinsichtlich der Dynamik der Ansteuerung des Aktuators gestuft ausgeführt sein: eine erste Regelungsroutine umfasst eine höchste Dynamik der Ansteuerung (höchste Geräuschentwicklung bei der Betätigung des Aktuators), eine zweite Regelungsroutine umfasst eine geringere Dynamik (mit geringerer Geräuschentwicklung), eine n-te Regelungsroutine (mit n = 3, 4, 5...) umfasst eine immer geringere Dynamik als die n-1-te Regelungsroutine (mit immer geringerer Geräuschentwicklung).

Insbesondere wird das Kraftfahrzeug in dem ersten Betriebszustand (und in dem zweiten Betriebszustand) über ein Drehmoment einer Antriebseinheit des Kraftfahrzeuges angetrieben. In dem zweiten Betriebszustand können insbesondere Situationen berücksichtigt werden, in denen kein Drehmoment der Antriebseinheit zum Antrieb des Kraftfahrzeugs genutzt wird. Beispielsweise ist die Antriebseinheit im zweiten Betriebszustand dann im Leerlauf, d. h. ein Antriebsstrang des Kraftfahrzeuges ist z. B. über eine Kupplung von der Antriebseinheit getrennt, so dass Antriebseinheit und Antriebsstrang nicht miteinander verbunden sind (und kein Drehmoment zwischen Antriebsstrang und Antriebseinheit übertragen wird).

Bevorzugt steht das Kraftfahrzeug in dem zweiten Betriebszustand.

Eine als Antriebseinheit des Kraftfahrzeuges vorgesehene Verbrennungskraftmaschine kann in dem zweiten Betriebszustand ausgeschaltet sein (z. B. infolge einer Start-Stopp-Automatik).

Insbesondere entspricht die zweite (oder n+1-te) Regelungsroutine der mit einem PT1-Regler oder einem PT2-Regler beaufschlagten ersten (oder n-ten) Regelungsroutine.

Insbesondere unterscheiden sich die Regelungsroutinen durch den verwendeten Regler. Insbesondere wird ein zur Ansteuerung des Aktuators bzw. des Antriebsmotors verwendetes Signal (das der gewünschten Betätigung des Aktuators nachfolgt und die gewünschte Betätigung (Soll-Betätigung) realisieren soll) durch die verwendete Regelungsroutine mehr oder weniger gegenüber der Soll-Betätigung verzögert bzw. abgebremst. Dabei kann bei einer ersten (oder n-ten) Regelungsroutine ein PT1-Regler verwendet werden, während bei einer zweiten (oder n+1-ten) Regelungsroutine (mit reduzierter Dynamik) ein PT2-Regler verwendet wird.

Es ist insbesondere auch möglich, dass die Regelungsroutine durch eine Kombination von PT1-Regler und PT2-Regler gebildet wird, bzw. dass die Regelungsroutine zwischen dem Signal eines PT1-Reglers und eines PT2-Reglers interpoliert. Des Weiteren ist es möglich auch zwischen der Messgröße und der Sollwertvorgabe zu interpolieren, so dass die tatsächliche Systemzeitkonstante weiter angenähert werden kann.

Gemäß einer bevorzugten Ausgestaltung ist die Komponente eine Kupplung. Insbesondere ist der Aktuator also zur Betätigung einer Kupplung vorgesehen, insbesondere einer Lamellenkupplung, bevorzugt einer Kupplung, die an einer Seitenwelle eines Kraftfahrzeuges angeordnet ist, so dass durch das Schließen der Kupplung die ganze Achse (hier wird die aktuierte Kupplung als Booster bezeichnet) oder auch nur ein Rad (hier wird die aktuierte Kupplung als Twinster bezeichnet) des Kraftfahrzeuges mit einer Antriebseinheit des Kraftfahrzeuges drehmomentübertragend verbunden wird. Der Aktuator ist insbesondere ein elektromechanischer Aktuator.

Das Verfahren kann insbesondere in Abhängigkeit von einer mit der gewünschten Betätigung angeforderten Soll-Stellung des Aktuators abwählbar sein. Insbesondere kann identifiziert werden (z. B. über die Art und Weise, wie die Betätigung des Aktuators eingeleitet wird), ob ggf. eine anhand des vorliegenden Betriebszustands auszuwählende (n-te) Regelungsroutine durch eine andere (insbesondere eine n-1-te oder die erste) Regelungsroutine ersetzt werden soll.

Ggf. kann aus der Art und Weise der Einleitung der Betätigung (erfolgt die gewünschte Betätigung sehr schnell oder sollen hohe Drehmomente der Antriebseinheit möglichst schnell auf einen Antriebsstrang des Kraftfahrzeuges übertragen werden) darauf geschlossen werden, ob hier eine höhere Geräuschentwicklung der Aktuatoreinrichtung infolge der höheren Dynamik in Kauf genommen werden sollte, um eine schnellere Umsetzung der gewünschten Betätigung zu ermöglichen.

Das Verfahren kann in Abhängigkeit von einem Betrag eines mit der gewünschten Betätigung angeforderten Drehmoments abwählbar sein.

Wenn das Verfahren abgewählt wird, kann der Antriebsmotor des Aktuators unmittelbar gemäß der ersten Regelungsroutine (also mit hoher/höchster Dynamik) angesteuert bzw. beschleunigt werden.

Es wird weiter ein Kraftfahrzeug vorgeschlagen, zumindest aufweisend eine Antriebseinheit zum Antrieb des Kraftfahrzeuges sowie eine Aktuatoreinrichtung mit einem Aktuator zur Betätigung einer Komponente des Kraftfahrzeuges. Die Aktuatoreinrichtung weist einen Antriebsmotor zum Antrieb des Aktuators und eine Steuereinrichtung auf. Die Steuereinrichtung ist zur Durchführung des bereits beschriebenen Verfahrens geeignet ausgeführt und eingerichtet bzw. kann das hier beschriebene Verfahren im Betrieb des Kraftfahrzeugs ausführen.

Insbesondere ist die Komponente eine Kupplung, durch die ein Drehmoment der Antriebseinheit zum Antrieb des Kraftfahrzeuges in einen Antriebsstrang des Kraftfahrzeuges ein- und auskuppelbar ist.

Die Ausführungen zu dem Verfahren sind insbesondere auf das Kraftfahrzeug übertragbar und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Gleiche Bezugszeichen bezeichnen gleiche Gegenstände, so dass ggf. Erläuterungen aus anderen Figuren ergänzend herangezogen werden können. Es zeigen schematisch:
- Fig. 1:: ein Kraftfahrzeug mit einem Aktuator und einem Teil einer Kupplung in einer Seitenansicht sowie mit einer Steuereinrichtung; und
- Fig. 2:: den Verlauf der Ansteuerung des Aktuators gemäß mehrerer Regelungsroutinen in einem Diagramm.

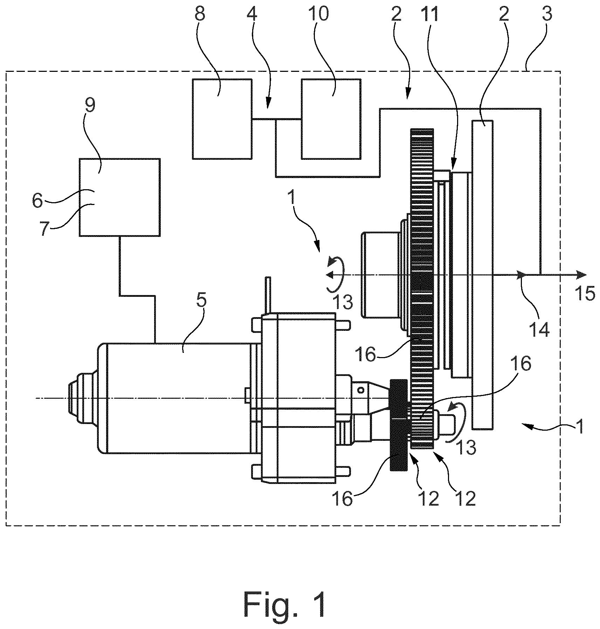

Fig. 1 zeigt ein Kraftfahrzeug 3 mit einer Aktuatoreinrichtung 2 und einem Teil einer Kupplung als Komponente 4 in einer Seitenansicht sowie mit einer Steuereinrichtung 9.

Der hier dargestellte Aufbau einer Kupplung und eines Aktuators 1 ist z. B. aus der DE 100 65 355 C2 bekannt.

Der Aktuator 1 umfasst einen elektrischen Antriebsmotor 5 und eine Steuereinrichtung 9, einen Rampenmechanismus 11 sowie eine Übersetzung 12. Eine Drehbewegung 13 des Antriebsmotors 5 wird über eine Übersetzung 12 (die Zahnradpaarungen) auf den Rampenmechanismus 11 übertragen. Über den Rampenmechanismus 11 wird die Drehbewegung 13 des Antriebsmotors 5 in eine Verlagerung 14 entlang einer axialen Richtung 15 umgewandelt. Die Verlagerung 14 wird zur Betätigung der Komponente 4, hier einer Kupplung, genutzt. Die Kupplung dient der drehmomentübertragenden Verbindung von Antriebseinheit 8 und Antriebsstrang 10 (z. B. Getriebe, Seitenwellen, Längswellen) zum Antrieb der Räder des Kraftfahrzeugs 3.

Der Aktuator 1 weist den Antriebsmotor 5 und mehrere Zahnradpaarungen (miteinander z. B. über Spiel verbundene mechanische Bauteile 16 der Aktuatoreinrichtung 2) als Übersetzung 12 auf, über die ein Drehmoment des Antriebsmotors 5 zur Betätigung der Komponente 4 übertragbar ist.

Über die Aktuatoreinrichtung 2 können Geräusche verursacht werden, z. B. durch das Anlegen der Zahnflanken von den im Eingriff miteinander stehenden Zahnrädern (gerade bei einer Umkehr der (Dreh-)Bewegung des Antriebsmotors 5). Bei einer Betätigung des Aktuators 1 mit einer hohen Dynamik (erste Regelungsroutine 6) erfolgt die Ansteuerung des Antriebsmotors 5 mit hoher Geschwindigkeit und möglichst geringer Verzögerung gegenüber der gewünschten Betätigung. Dabei werden z. B. die miteinander über Spiel verbundenen mechanischen Bauteile 16 der Aktuatoreinrichtung 2 möglichst schnell beschleunigt und verfahren, so dass nach Überwindung des zwischen den Bauteilen 16 vorliegenden Spiels ein mechanischer Kontakt der Bauteile 16 erfolgt. Dieser mechanische Kontakt kann gerade in bestimmten Betriebszuständen des Kraftfahrzeuges 3 für Insassen des Kraftfahrzeuges 3 akustisch erfasst werden (hörbar sein).

Hier wird nun vorgeschlagen, dass in Abhängigkeit von einem aktuell vorliegenden Betriebszustand des Kraftfahrzeuges 3 über die Steuereinrichtung 9 festgestellt wird, welche Regelungsroutine 6, 7 zur Ansteuerung des Antriebsmotors 5 auszuwählen ist.

Die zweite Regelungsroutine 7 umfasst eine Betätigung des Aktuators 1 mit einer angepassten und/oder geringeren Dynamik (Drehgeschwindigkeit, Beschleunigung bzw. Abbremsen) als durch die erste Regelungsroutine 6. Der Aktuator 1 bzw. dessen Antriebsmotor 5 wird dabei unter Berücksichtigung des realen Systemverhaltens angesteuert. Dabei wird durch sanfteres Verfahren des Antriebsmotors 5 eine plötzliche Beschleunigung des Antriebsmotors 5 und der über den Antriebsmotor 5 angetriebenen Bauteile 16 vermieden .

Insbesondere wird so ermöglicht, dass ein zwischen den mechanischen Bauteilen der Aktuatoreinrichtung 2 vorliegendes Spiel mit angepasster und/oder reduzierter Beschleunigung bzw. Geschwindigkeit überwunden wird. Z. B. kann so ermöglicht werden, dass sich die Zahnflanken miteinander in Eingriff stehender Zahnräder langsamer aneinander anlegen als bei der ersten Regelungsroutine 6. Eine Geräuschentwicklung kann so reduziert werden.

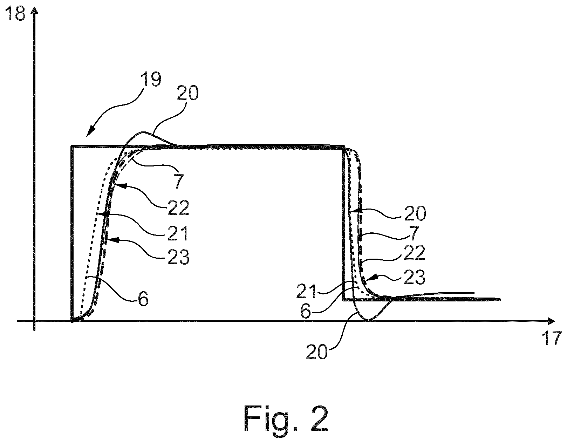

Fig. 2 zeigt den Verlauf der Ansteuerung des Aktuators 1 gemäß mehrerer Regelungsroutinen 6, 7 in einem Diagramm. In dem Diagramm ist auf der horizontalen Achse die Zeit 17 und auf der vertikalen Achse die Position 18 des Antriebsmotors 5 aufgetragen.

Der erste Verlauf 19 zeigt die gewünschte Betätigung des Aktuators 1. Der Antriebsmotor 5 soll also auf eine bestimmte Position 18 verfahren werden. Eine normale (bekannte) Regelung wird durch den zweiten Verlauf 20 dargestellt. Über die Steuereinrichtung 9 wird der Antriebsmotor 5 möglichst schnell bewegt, wobei Über- bzw. Unterschwingungen des Antriebsmotors 5 zum Erreichen der gewünschten Position 18 erkennbar sind.

Der dritte Verlauf 21 zeigt den gemessenen Verlauf der Position 18 des Antriebsmotors 5 gemäß einer ersten Regelungsroutine 6, wobei der dritte Verlauf 21 ausgehend vom zweiten Verlauf 20 mit einem PT1-Regler erzeugt wurde.

Der vierte Verlauf 22 zeigt den gemessenen Verlauf der Position 18 des Antriebsmotors 5 gemäß einer zweiten Regelungsroutine 7, wobei der vierte Verlauf 22 ausgehend vom zweiten Verlauf 20 mit einem PT2-Regler erzeugt wurde.

Der fünfte Verlauf 23 zeigt den gemessenen Verlauf der Position 18 des Antriebsmotors 5 gemäß einer weiteren Regelungsroutine, wobei der fünfte Verlauf 23 während des Anstiegs der Position 18 (entlang der vertikalen Achse nach oben) durch eine Interpolation des dritten Verlaufs 21 und des vierten Verlaufs 22 sowie durch eine Interpolation der Messgröße und Sollwertgröße zur Annäherung der Filterzeitkonstanten an die Systemzeitkonstante gebildet wird. Während des Abfalls der Position 18 (entlang der vertikalen Achse nach unten) folgt der fünfte Verlauf 23 dem vierten Verlauf 22 (dem Signal des PT2-Reglers).

### Bezugszeichenliste

- 1: Aktuator
- 2: Aktuatoreinrichtung
- 3: Kraftfahrzeug
- 4: Komponente
- 5: Antriebsmotor
- 6: erste Regelungsroutine
- 7: zweite Regelungsroutine
- 8: Antriebseinheit
- 9: Steuereinrichtung
- 10: Antriebsstrang
- 11: Rampenmechanismus
- 12: Übersetzung
- 13: Drehbewegung
- 14: Verlagerung
- 15: axiale Richtung
- 16: Bauteil
- 17: Zeit
- 18: Position
- 19: erster Verlauf
- 20: zweiter Verlauf
- 21: dritter Verlauf
- 22: vierter Verlauf
- 23: fünfter Verlauf

## Patentansprüche

1. Verfahren zur Steuerung eines Aktuators (1) einer Aktuatoreinrichtung (2) eines Kraftfahrzeugs (3), wobei die Aktuatoreinrichtung (2) zumindest eine durch den Aktuator (1) betätigte Komponente (4), den Aktuator (1) sowie einen Antriebsmotor (5) zum Antrieb des Aktuators (1) aufweist, wobei der Antriebsmotor (5) in Abhängigkeit von einem Betriebszustand des Kraftfahrzeuges (3) angesteuert wird; wobei in einem ersten Betriebszustand eine Betätigung des Aktuators (1) gemäß einer ersten Regelungsroutine (6) mit einer hohen Dynamik des Antriebsmotors (5) erfolgt, **dadurch gekennzeichnet, dass** in einem zweiten Betriebszustand die Betätigung des Aktuators (1) gemäß einer zweiten Regelungsroutine (7) mit einer angepassten Dynamik des Antriebsmotors (5) erfolgt; wobei das Verfahren zumindest die folgenden Schritte umfasst:
a) Feststellen einer gewünschten Betätigung des Aktuators (1);
b) Feststellen eines aktuell vorliegenden Betriebszustands des Kraftfahrzeuges (3);
c) Auswählen der für den Betriebszustand vorgesehenen Regelungsroutine (6, 7);
d) Ansteuern des Antriebsmotors (5) mit der ausgewählten ersten Regelungsroutine (6) oder zweiten Regelungsroutine (7);
wobei sich der erste Betriebszustand und der zweite Betriebszustand zumindest auf eine Geräuschentwicklung des Kraftfahrzeuges (3) bezieht.

2. Verfahren nach Patentanspruch 1, wobei das Kraftfahrzeug (3) in dem ersten Betriebszustand eine erste Geräuschentwicklung und in dem zweiten Betriebszustand eine zweite Geräuschentwicklung aufweist; wobei die zweite Geräuschentwicklung geringer ist als die erste Geräuschentwicklung.

3. Verfahren nach einem der vorhergehenden Patentansprüche, wobei das Kraftfahrzeug (3) in dem ersten Betriebszustand über ein Drehmoment einer Antriebseinheit (8) des Kraftfahrzeuges (3) angetrieben wird; wobei in dem zweiten Betriebszustand Situationen berücksichtigt werden, in denen kein Drehmoment der Antriebseinheit (8) zum Antrieb des Kraftfahrzeugs (3) genutzt wird.

4. Verfahren nach einem der vorhergehenden Patentansprüche, wobei das Kraftfahrzeug (3) in dem zweiten Betriebszustand steht.

5. Verfahren nach einem der vorhergehenden Patentansprüche, wobei eine als Antriebseinheit (8) des Kraftfahrzeuges (3) vorgesehene Verbrennungskraftmaschine in dem zweiten Betriebszustand ausgeschaltet ist.

6. Verfahren nach einem der vorhergehenden Patentansprüche, wobei die zweite Regelungsroutine der mit einem PT1-Regler oder einem PT2-Regler verzögerten ersten Regelungsroutine entspricht.

7. Verfahren nach einem der vorhergehenden Patentansprüche, wobei die Komponente eine Kupplung ist.

8. Verfahren nach einem der vorhergehenden Patentansprüche, wobei das Verfahren in Abhängigkeit von einer mit der gewünschten Betätigung angeforderten Soll-Stellung des Aktuators (1) abwählbar ist.

9. Kraftfahrzeug (3), zumindest aufweisend eine Antriebseinheit (8) zum Antrieb des Kraftfahrzeuges (3) sowie eine Aktuatoreinrichtung (2) mit einem Aktuator (1) zur Betätigung einer Komponente (4) des Kraftfahrzeuges (3); wobei die Aktuatoreinrichtung (1) einen Antriebsmotor (5) zum Antrieb des Aktuators (1) und eine Steuereinrichtung (9) aufweist; wobei die Steuereinrichtung (9) zur Durchführung des Verfahrens nach Anspruch 1 durchgeführt wird.

10. Kraftfahrzeug (3) nach Patentanspruch 9, wobei die Komponente (4) eine Kupplung ist, durch die ein Drehmoment der Antriebseinheit (8) zum Antrieb des Kraftfahrzeuges (3) in einen Antriebsstrang (10) des Kraftfahrzeuges (3) ein- und auskuppelbar ist.

## Claims

1. Method for controlling an actuator (1) of an actuator unit (2) of a motor vehicle (3), wherein the actuator unit (2) has at least one component (4) which is activated by the actuator (1), the actuator (1) and a drive motor (5) for driving the actuator (1), wherein the drive motor (5) is actuated in as a function of an operating state of the motor vehicle (3); wherein in a first operating state the actuator (1) is activated according to a first control routine (6) with high dynamics of the drive motor (5), **characterized in that** in a second operating state the actuator (1) is activated according to a second control routine (7) with adapted dynamics of the drive motor (5); wherein the method comprises at least the following steps:
a) detecting desired activation of the actuator (1);
b) detecting a currently present operating state of the motor vehicle (3);
c) selecting the control routine (6, 7) which is provided for the operating state;
d) actuating the drive motor (5) with the selected first control routine (6) or second control routine (7);
wherein the first operating state and the second operating state relate at least to generation of noise by the motor vehicle (3).

2. Method as claimed in claim 1, wherein the motor vehicle (3) has a first noise generation level in the first operating state, and a second noise generation level in the second operating state; wherein the second noise generation level is lower than the first noise generation level.

3. Method as claimed in one of the preceding claims, wherein in the first operating state the motor vehicle (3) is driven by means of a torque of a drive unit (8) of the motor vehicle (3), wherein in the second operating state situations are taken into account in which torque of the drive unit (8) is not used to drive the motor vehicle (3).

4. Method as claimed in one of the preceding claims, wherein the motor vehicle (3) is in the second operating state.

5. Method as claimed in one of the preceding claims, wherein an internal combustion engine which is provided as a drive unit (8) of the motor vehicle (3) is switched off in the second operating state.

6. Method as claimed in one of the preceding claims, wherein the second control routine corresponds to the first control routine which is delayed with a PT1 controller or a PT2 controller.

7. Method as claimed in one of the preceding claims, wherein the component is a clutch.

8. Method as claimed in one of the preceding claims, wherein the method can be deselected in accordance with a setpoint position of the actuator (1) which is requested with the desired activation.

9. Motor vehicle (3), at least having a drive unit (8) for driving the motor vehicle (3) and an actuator unit (2) with an actuator (1) for activating a component (4) of the motor vehicle (3); wherein the actuator unit (1) has a drive motor (5) for driving the actuator (1) and a control device (9); wherein the control device (9) is suitable for carrying out the method as claimed in claim 1.

10. Motor vehicle (3) as claimed in claim 9, wherein the component (4) is a clutch by which a torque of the drive unit (8) for driving the motor vehicle (3) can be coupled into a drive train (10) of the motor vehicle (3) and decoupled therefrom.

## Revendications

1. Procédé de commande d'un actionneur (1) d'un dispositif d'actionnement (2) d'un véhicule automobile (3), le dispositif d'actionnement (2) présentant au moins un composant (4) actionné par l'actionneur (1), l'actionneur (1) ainsi qu'un moteur d'entraînement (5) permettant d'entraîner l'actionneur (1), le moteur d'entraînement (5) étant piloté en fonction d'un état de fonctionnement du véhicule automobile (3) ; dans lequel, dans un premier état de fonctionnement, un actionnement de l'actionneur (1) est effectué selon une première routine de régulation (6) avec une dynamique élevée du moteur d'entraînement (5),
**caractérisé en ce que** dans un deuxième état de fonctionnement, l'actionnement de l'actionneur (1) est effectué selon une deuxième routine de régulation (7) avec une dynamique adaptée du moteur d'entraînement (5) ; le procédé comprenant au moins les étapes suivantes consistant à :
a) constater un actionnement souhaité de l'actionneur (1) ;
b) constater un état de fonctionnement actuellement présent du véhicule automobile (3) ;
c) sélectionner la routine de régulation (6, 7) prévue pour l'état de fonctionnement (6, 7) ;
d) piloter le moteur d'entraînement (5) avec la première routine de régulation (6) ou la deuxième routine de régulation (7) sélectionnée ;
le premier état de fonctionnement et le deuxième état de fonctionnement se référant au moins à une émission de bruit du véhicule automobile (3).

2. Procédé selon la revendication 1, dans lequel le véhicule automobile (3) présente dans le premier état de fonctionnement une première émission de bruit et présente dans un deuxième état de fonctionnement une deuxième émission de bruit ; la deuxième émission de bruit étant inférieure à la première émission de bruit.

3. Procédé selon l'une quelconque des revendications précédentes, dans lequel le véhicule automobile (3) est entraîné dans le premier état de fonctionnement par l'intermédiaire d'un couple d'une unité d'entraînement (8) du véhicule automobile (3) ; dans lequel, dans le deuxième état de fonctionnement, des situations sont prises en compte dans lesquelles aucun couple de l'unité d'entraînement (8) n'est exploité pour entraîner le véhicule automobile (3).

4. Procédé selon l'une quelconque des revendications précédentes, dans lequel le véhicule automobile (3) se trouve dans le deuxième état de fonctionnement.

5. Procédé selon l'une quelconque des revendications précédentes, dans lequel un moteur à combustion interne prévu comme unité d'entraînement (8) du véhicule automobile (3) est mis hors circuit dans le deuxième état de fonctionnement.

6. Procédé selon l'une quelconque des revendications précédentes, dans lequel la deuxième routine de régulation correspond à la première routine de régulation retardée par un régulateur PT1 ou un régulateur PT2.

7. Procédé selon l'une quelconque des revendications précédentes, dans lequel le composant est un embrayage.

8. Procédé selon l'une quelconque des revendications précédentes, dans lequel le procédé peut être désélectionné en fonction d'une position de consigne de l'actionneur (1) exigée par l'actionnement souhaité.

9. Véhicule automobile (3), présentant au moins une unité d'entraînement (8) permettant d'entraîner le véhicule automobile (3), ainsi qu'un dispositif d'actionnement (2) avec un actionneur (1) permettant d'actionner un composant (4) du véhicule automobile (3) ; le dispositif d'actionnement (1) présentant un moteur d'entraînement (5) permettant d'entraîner l'actionneur (1) et un dispositif de commande (9) ; le dispositif de commande (9) étant exécuté pour exécuter le procédé selon la revendication 1.

10. Véhicule automobile (3) selon la revendication 9, dans lequel le composant (4) est un embrayage permettant d'embrayer et de débrayer un couple de l'unité d'entraînement (8) afin d'entraîner le véhicule automobile (3) dans une chaîne cinématique (10) du véhicule automobile (3).
